# EUROPEAN PATENT APPLICATION

(11) **EP 4 576 479 A1**
(43) Date of publication of application: **25.06.2025**
(21) Application number: 24221429.4
(22) Date of filing: 19.12.2024
(51) Int. Cl.: H02J 3/14, H02J 3/32, H02J 7/00

(54) **SMART DOMESTIC BATTERY ASSEMBLY WITH OVERLOAD PROTECTION**

(30) Priority: 22.12.2023 NL 2036650
(71) Applicant: Homewizard Holding B.V., 2201 CX Noordwijk (NL)
(72) Inventor: MESMAN, Steffan Robbert, 2201 CX NOORDWIJK (NL); STRAATHOF, Paulus Antonius Maria, 2201CX NOORDWIJK (NL)
(74) Representative: EP&C

(57) **Abstract**

The present invention relates to a method of operating a domestic battery assembly by absorbing and/or supplying electric energy from, respectively to a domestic electricity grid in a building, wherein the method comprises the steps of:
- providing a domestic battery assembly, comprising a battery, a battery plug, and a battery control device,
- connecting the battery assembly to the grid,
- connecting a current sensor device to the grid at an electricity meter of the building,
- measuring an electric meter current that is fed into or out of the grid via the electricity meter,
- determining a maximum electric current for the grid,
- comparing, with a central processing device, the electric meter current with the maximum electric current to obtain an electric current margin, and
- if the obtained current margin is positive, controlling the battery assembly with the battery control device to supply electric energy to the grid by discharging the battery at a battery discharge current equal to or smaller than the current margin.

## Description

### Field of the invention

The present invention relates to a method of operating a domestic battery assembly by absorbing and/or supplying electric energy from, respectively to a domestic electricity grid in a building. The present invention further relates to a domestic battery assembly for absorbing and/or supplying electric power from, respectively to a domestic electricity grid in a building and to a current sensor device, both for use in such a method.

### State of the art

At present, it is commonly known to perform ancillary services for electric grids by means of batteries. One may temporarily store electric energy to compensate for peaks in the electricity grid, or one may store electric energy from renewable sources, such as from photovoltaic panels, wind turbines or electric vehicles with vehicle-to-grid technology. Such temporary storage may be beneficial when not all electric energy generated at a certain point in time will be consumed at that moment.

Such temporary storage may be beneficial for domestic use. If, for example, a user would have its own photovoltaic panels, it would be interesting to store electric energy during the day, when the sun is up, and to use the electric energy in the evening, when no electric energy is generated with the photovoltaic panels anymore.

Conventional domestic batteries are, however, typically complicated electric installations, which require professionals to install. This may have to do with safety standards, due to potential risks, such as overloading and short-circuiting of the grid. Such professional installation may involve significant costs and may increase the price of such batteries, especially since the overall storage capacity does not need to be very large, thus involving a relatively large investment per unit of energy stored.

In US 2018/041072 A1, a plug and play smart energy storage unit is disclosed, which is connectable to a domestic grid via an outlet and to selectively charge and discharge a battery. This storage unit aims to operate in a safe manner and proposes to monitor the condition of circuits, e.g. groups, of the domestic to avoid overloading. This publication thereby proposes to identify the location of the storage units or other supplies of electric energy, e.g. solar panels, as well as appliances in the various circuits to determine a maximum potential load. The publication mentions that this identifying can be done "online", so required repeated mapping of the entire domestic grid.

A similar system is disclosed in WO 2023/073335 A1, which proposes identifying appliances in the domestic grid via a wired or wireless (data) connection between wall outlets and a central process, in order to track their energy consumption repeatedly in an aim to calculate the margin at which electric energy can be supplied into the domestic grid from a battery.

Although both these known systems may perform well, their operation is rather cumbersome and aimed at maximizing efficiency and net-zero currents through the electricity. As a result these known systems do require monitoring of all appliances or sources of electric energy that are present in the grid. Alternatively or additionally, all wall outlets in the house need to be monitored individually, knowing their position in a certain phase and/or group of the domestic grid. In modern-day houses, this number of appliances and outlet can exceed 100, making individual monitoring very complicated.

Although safety and efficiency are important for the present invention, the main aim is to provide a robust and reliable method of locally storing electric energy without complicated and expensive professional installation.

### Object of the invention

It is therefore an object of the invention to provide for a method and battery assembly for domestic use, which is more convenient to install and still safe to use, or at least to provide an alternative method and battery assembly.

### Detailed description

The present invention provides a method of operating a domestic battery assembly by absorbing and/or supplying electric energy from, respectively to a domestic electricity grid in a building, which grid comprises one or more electric phases and/or one or more groups to which electrical appliances are connected, wherein the method comprises the steps of:
- providing a domestic battery assembly, comprising:
   a battery, configured to at least temporarily store electric energy,
   a battery plug, electrically connected to the battery through a cable and configured to be inserted in a power socket of the grid, and
   a battery control device, functionally associated with the battery and configured to control charging and discharging of the battery,
- connecting the battery assembly to the grid by inserting the battery plug in a power socket of the grid,
- providing a current sensor device that is configured to measure electric currents,
- providing a central processing device, functionally associated with the current sensor device and the battery control device,
- connecting the current sensor device to the grid at or near an electricity meter of the building, for example inserting the sensor device in a P1 port of the electricity meter, and
- determining a maximum electric current for the grid- preferably, repeating the steps of:
   - measuring, with the current sensor device, an electric meter current that is fed into or out of the grid via the electricity meter,
   - comparing, with the central processing device, the electric meter current with the maximum electric current to obtain an electric current margin, in particular:
      - obtaining, with the central processing device, an electric current margin by solely comparing the electric meter current with the maximum electric current, and
   - if the obtained current margin is positive, controlling the battery assembly with the battery control device to supply electric energy to the grid by discharging the battery at a battery discharge current equal to or smaller than the current margin.

The present method is typically applied for domestic purposes, for example in houses, apartments, or other buildings, such as offices, with a conventional domestic electricity grid. Such a grid may be defined as the entire electric circuitry in the building that is located downstream of the electricity meter of the building, so distinct from the public outdoor grid and outside the responsibility of a grid operator.

The method relies on a domestic battery assembly that is configured to store electric energy in a battery. This storage is at least temporarily, so that the battery can absorb electric energy, hold the electric energy for a certain period of time and discharge the electric energy afterwards. The battery assembly comprises a conventional battery plug, with which the battery can be connected to a power socket in the domestic electricity grid in a manner similar to other household appliances. The battery may for example be of the LFP-type, which may have an improved safety compared to conventional Li-ion-type batteries.

The present method includes an additional safety measure, which avoids electric overloading of the domestic grid. Hence, the individual phases in the domestic grid or different groups may be rated at a certain maximum electric current. This maximum current is typically set with safety breakers in the fuse box, near the electricity meter. These are typically rated at a maximum current, with a safety margin, but only measure the electric current obtained from the public grid and through the electricity meter. If one would connect a conventional domestic battery to the domestic grid, one may risk that electric current is supplied both through the breaker and from the battery, so that a potential combined electric current may lie above the rated maximum current of the breakers. This combined current will not pass through the breakers, so will not be detected therewith. As a result, the combined current may lead to overloading of the domestic grid with all associated risks.

The additional safety measure according to the present method relies on the fact that an additional electric current measurement is performed by means of the current sensor device. The current sensor device may be provided at or near the electricity meter and is thereby able to measure the electric current that is retrieved from the public grid or that is fed into the public grid. This measurement may be a global current measurement, so a combined measurement for all phases and/or groups of the domestic grid combined, or may be specifically performed for the respective phase or group of the domestic grid in which the power socket is included and thus the respective phase or group to which the battery assembly is connected.

During operation, the battery assembly is connected to the domestic grid via the battery plug that is inserted in the power socket. The battery assembly may be connected to any power socket in the building, which means that it is not required for a user to determine in advance to which phase or which group the battery assembly is connected, nor does the user need to set this as a control parameter. This is a first step to make installation more user friendly, compared to the known systems.

The battery control device is associated with the battery, for example physically included in the battery assembly. Alternatively, the battery control device may as well be operated remotely, for example via a wireless network connection, such as via Wi-Fi. The battery control device is configured to control charging and discharging of the battery during use of the battery assembly and may, to this effect, be functionally connected to the current sensor device, for example via a wired connection or a wireless network connection, such as Wi-Fi.

During use, the current sensor device is configured to measure electric currents and to emit a current sensor signal representative of the current that is measured. The current sensor signal may be transmitted to the battery control device, so that the battery control device is able to control charging and discharging of the battery on the basis of the current sensor signal.

The step of measuring preferably solely consists of measuring the electric meter current, without measuring other electric currents in the domestic grid. This implies that no individual measurements are, and in fact need to be, done on local level. For example, it would not be necessary to measure the electric current fed through each of the groups of the grid and/or the phases. Instead, the present invention may provide for a less complicated and more robust method of operating a domestic battery assembly, allowing for a conservative determination of the available electric current margin, without requiring further knowledge about the domestic grid.

With the current sensor device provided at the electricity meter, the overall electricity consumption or delivery of the building may used as an input for the current sensor signal. As an example, the current sensor device may be inserted in the P1 port of the electricity meter. Such a P1 port is generally provided in the electricity meter with the purpose of monitoring and servicing and generally operates according to a standardized protocol, which allows for convenient cooperation with the current sensor device.

During use, the electric current at the electricity meter is measured with the current sensor device and the current sensor signal is transmitted to the central processing device of the battery assembly. The central processing device may then determine the maximum current for the domestic grid. This determining may be carried out in situ, being specifically adapted for that grid, or may be determined in advance. Hence, in certain jurisdictions, local standards apply for a maximum electric current allowed in domestic grids, for example depending on the thickness of the conductors used in the grid. In The Netherlands, for example, a maximum electric current of 16 A typically applies for each group in a domestic grid. This value represents a maximum current per group, which means that a combined value for all groups combined may be larger. However, the intention of the present method is to provide an intrinsically safe operation. Since the battery assembly can be connected to any group or phase, a theoretical situation may occur that the entire electric current measured at the electricity meter will be consumed in a single group or phase. If the battery assembly were to be connected to that group or phase, it would still be necessary not to discharge the battery, or at least avoiding discharging the battery too much, to avoid exceeding the maximum electric current, whereas it may not be problematic if the battery assembly were to be connected to another phase or group.

The step of comparing preferably comprises the step of obtaining, with the central processing device, an electric current margin by solely comparing the electric meter current with the maximum electric current. This implies that the current margin is solely obtained on the basis of the global electric current at the meter and the maximum electric current for the entire domestic grid. No mapping-like step needs to be involved in which apparatuses are localized to see in which group or phase the electric current is consumed. Such localization would be rather complicated, since potentially a large number of apparatuses need to be measured, for example by providing additional current sensors at each phase or group and/or by alternatingly activating and deactivating apparatus to see their individual contributions to the global electric current.

The present method thereby relies on a comparison between the maximum electric current determined for the domestic grid and the measured electric current obtained from the current sensor signal, which comparison is made by the central processing device. The central processing device may be associated with the battery assembly, for example physically included therein. Alternatively, the central processing device may as well be operated remotely, for example via a wireless network connection, such as via Wi-Fi. Optionally, the central processing device and the battery control device may be the same device, for example a single computer device, which is configured to perform at least two functionalities, namely to function as the central processing device and as the battery control device.

The central processing device is configured to control the battery control device to control charging and discharging of the battery during use. The functional association between the current sensor device and the battery control device may nonetheless provide that signals can be transmitted between these three devices, either through a physical wired connection or a wireless network connection.

With the comparison between the electric meter current and the maximum electric current, the central processing device is able to determine whether the electric current in a group or phase of the grid, i.e. a theoretical current in case all current is drawn to a single group or phase, already reaches the maximum electric current, or whether there is an electric current margin. The electric current margin represents the remaining electric current that can be guided through the domestic grid, e.g. the groups or phases thereof, before reaching the maximum electric current above which operation may become unsafe.

Next, the central processing device, may, but not necessarily needs to, control the battery control device to discharge the battery. As such, electric energy can be fed into the domestic grid from the battery. However, the battery control device is controlled to let the battery discharge at an electric current that cannot be larger than the electric current margin, so that the overall current in the domestic grid cannot exceed the maximum electric current. In this way, the present method is able to safeguard that the electric current in the domestic grid cannot exceed the maximum electric current, even when such an exceeding is not detected by the grid's breakers in the fuse box.

As such, the present method may enable intrinsically safe operation of the battery assembly for temporarily storing electric energy, without requiring professional installers, since the maximum electric current of the domestic grid cannot be exceeded. As indicated, the present battery assembly can be installed by the end users themselves, being connectable to any power socket of the grid, whilst still ensuring safe operation and avoiding exceeding of the maximum electric current.

In an embodiment, the method comprises repeating the steps of measuring, comparing and, if the obtained current margin is positive, controlling of the battery assembly.

According to this embodiment, a feedback loop of measuring electric current and determining the electric current margin is repeated over time, for example at certain intervals. As such, the controlling of the battery assembly with the battery control device can be repeated and adjusted to the changing electric meter current repeatedly. If, for example, the electric meter current will reach the maximum electric current, or possibly even exceed the maximum electric current when the electric current is spread over multiple of the groups or phases, the battery control device may control the battery assembly to at least temporarily pause the discharging of the battery, in order to avoid overloading of the domestic grid.

In an embodiment, the step of measuring the electric meter current comprises measuring a global maximum electric current for the grid, i.e. combined for all phases and/or groups of the grid. According to this embodiment, such a combined electric meter current forms a conservative measurement, since normally electric current spread across multiple phases or currents in a typical building. However, since the current method can be free of a mapping step, the (theoretical) worst-case situation is taken into account where all electric energy is fed into a single group or phase and where the battery assembly is connected to that same group or phase. As such, overloading of that group or phase is prevented by only discharging the battery, i.e. when it is being discharged, up to the electric current margin that is obtained for that worst-case scenario.

The present method thus provides for a robust overloading safety, since a worst-case scenario is followed for the electric current margin and since no mapping is needed for appliances that are connected to the domestic grid. As a result, the systems used for carrying out the method can be provided relatively simple and thus relatively inexpensive.

Furthermore, in practise, i.e. when the globally-measured electric meter current is in fact spread over multiple phases or groups, the actual electric current margin will be larger than the electric current margin that is obtained by the present method, resulting in an improved margin to prevent overloading of the domestic grid.

In an embodiment, the step of determining the maximum electric current for the grid comprises determining a global maximum electric current for the grid, i.e. combined for all phases and/or groups of the grid. Similar to the measurement of the electric meter current mentioned above, is it possible to determine the maximum electric current for all phases and/or groups combined.

Hence, each of the phases may (at least in some jurisdictions) have a maximum electric current of 25 A or 35 A. This value may taken as the maximum electric current for the entire domestic grid, even when for example three phases are present that are each capable of withstanding 25 A or 35 A. By taking a worst-case scenario for determining the electric current margin, as if all electric current is consumed in a single one of the phases, it can be safeguarded at all time that this phase is overloaded during discharging of the battery.

Similarly, the domestic grid may comprise a plurality of groups that are (at least in some jurisdictions) rated at a maximum electric current of 16 A. This value may taken as the maximum electric current for the entire domestic grid, even when for example multiple groups are present that are each capable of withstanding 16 A. By taking a worst-case scenario for determining the electric current margin, as if all electric current is consumed in a single one of the groups, it can be safeguarded at all time that this phase is overloaded during discharging of the battery.

In an embodiment, the step of determining the maximum electric current comprises retrieving a maximum rated electric current for each of the phases and/or groups of the grid, and selecting the lowest one of the maximum rated electric currents as the maximum electric current.

This embodiment may be beneficial since different types of groups may be present in the domestic grid, depending on the appliances that are intended to be connected with that group. According to the present embodiment, the method may take into account that not all phases and/groups may have the same rating. As a conservative measure, the lowest one of the maximum rated electric currents is used for determining the electric current margin, which means that the obtained electric current margin can be lower than the margin that would be possible for the phases and/or groups with heavier rating.

However, if a higher maximum electric current of a heavier phase and/or group were to be relied on, the obtained current margin would be too large for the lighter phases and/or groups, yielding to potential overloading of the lighter phases and/or groups if the battery assembly were to be connected to such a lighter one.

In an embodiment, the step of comparing comprises the step of obtaining, with the central processing device, an electric current margin by exclusively comparing the electric meter current with the maximum electric current. According to this embodiment, no other parameters are taken into account for determining the electric current margin, except for the electric meter current and the maximum electric current. In this way, the present method can be simplified drastically, since no other parameters, such as mapping of the domestic grid or individual and instantaneous electricity consumption of individual appliances needs be carried out, allowing the method to be carried out without requiring further knowledge about the domestic grid.

In an embodiment, the method is carried independent of other appliances connected to the grid, for example in absence of a step of detecting other appliances to the grid and/or a step of measuring individual and/or instantaneous energy consumption of the other appliances and/or a step of mapping the grid. Similar as in the above embodiment, this embodiment may provide for a less complicated and more robust method of operating a domestic battery assembly, allowing for a conservative determination of the available electric current margin, without requiring further knowledge about the domestic grid.

In an embodiment, the step of measuring comprises measuring an electric current guided via the electricity meter for each electric phase, and combining the measured electric currents for all phases to obtain the electric meter current.

According to this embodiment, the maximum electric current may be determined individually for all of the phases of the domestic grid in combination. This may be beneficial when it is not known to which phase the battery assembly is connected and/or when the current sensor device is not able to distinguish between the phases when measuring the electric meter current. In the latter situation, the measured electric current by the current sensor device may already be the electric meter current, thus not requiring all electric currents for the different phases to be combined.

This embodiment may especially apply when the battery assembly can be connected to any of the phases. As such, the central processing device will need to adopt an additional safety margin, considering that least theoretically all electric current can be drawn through a single phase. In this way it is avoided that, again at least theoretically, the battery assembly will discharge electric energy into the phase that already draws a large electric current from the public grid through the electricity meter.

In an alternative embodiment, the step of measuring comprises detecting to which electric phase the battery assembly is connected, and measuring an electric current guided via the electricity meter for the electric phase to which the battery assembly is connected to obtain the electric meter current.

According to this embodiment, the location of the battery assembly will become known, for example to the central processing device. For example, the determining may be carried out by emitting a test pulse with the battery assembly, for example to discharge a small amount of electric energy into the domestic grid, which may be detectable by the current sensor device. On the basis of the current sensor signal, it may then be determined to which of the phases the battery assembly is connected.

Next, the comparison between the maximum electric current and the measured electric meter current may be limited to the specific phase to which the battery assembly is connected. As such, the electric current margin may be larger as compared to when the electric meter current were to be measured globally, for all phases combined. Any electric current drawn by other phases may be disregarded, since that will not influence the electric current in the phase to which the battery assembly is connected. Furthermore, the overload prevention in those other phases can be safeguarded in a conventional manner by the breakers in the grid's fuse box.

In an embodiment, the method further comprises the step of, if the electric meter current is negative, controlling the battery assembly with the battery control device to terminate discharging of the battery, or at least to reduce the battery discharge current at which the battery is discharged, in order to bring the electric meter current to zero or to a positive electric meter current. This situation may occur when electric energy is fed out of the domestic electricity grid and into the public grid.

According to the present embodiment, the central processing device may take into account a situation where the domestic grid may also include sources of renewable energy, such as photovoltaic panels, wind turbines or electric vehicles with vehicle-to-grid technology. During the day, these panels may generate electric energy. Such electric energy can be readily consumed in the domestic grid. The panels often produce more electric energy than the amount consumed in the building, so that electric energy can be fed into the public grid. When electric energy is fed into the public grid, it is no longer necessary to discharge the battery, since there already is an excess of electric energy in the domestic grid. A similar situation may occur when, for example, another battery is connected to the domestic grid, such as an electric vehicle, that is used to perform ancillary services with.

Alternatively, a negative electric meter current may imply that the battery discharge current is larger than the current at which electric energy is consumed in the domestic grid. In this case, the battery is discharged at a rate that is unnecessary large. Accordingly, the central processing device may control the battery assembly to discharge the battery at a lower battery discharge current, so that no electric energy is fed back into the public grid anymore and that the electric meter current will no longer be negative.

In an embodiment, the battery assembly may comprise multiple ones of the batteries that are connected to the domestic grid. The batteries may connected to each other, to be connected to the grid jointly, or may be connected to the grid separately, for example remote from each other. In both situations, the batteries may be configured to communicate with each other and/or with the battery control device for controlling charging and discharging of the batteries and for coordinating such between the batteries.

During the operating of the battery assembly with multiple batteries, the batteries can all be charged jointly and in parallel, since that would require feeding electric energy from the energy meter to the batteries, of which overloading is prevented by the regular safety breakers in the fuse box. For example, each of the batteries can be charged simultaneously at its maximum charging current, e.g. each being charged at 800 W, so that two batteries can be charged at 1600 W in total.

During discharging, the method may provide that a combined discharging current of all batteries will not exceed the electric current margin, for example remain below 800 W, even when the multiple batteries would in theory be capable of being discharged at larger combined current. This may contribute to the safety in preventing overloading, since the discharging current will not become too large, irrespective of the number of batteries.

The method may provide for an exception to this discharging limitation, when it can be confirmed that the multiple batteries are connected to different phases and/or groups, so that they cannot physically discharge in the same phase or group. In such cases, the discharging may be established at larger overall discharging currents, as long as the discharging current for each phase and/or group remains beneath a safety limit, for example below 800 W.

In an embodiment, the grid further comprises a connection with a source of electric energy, for example one or more photovoltaic panels, wind turbines or electric vehicles with vehicle-to-grid technology, and the method further comprises the steps of:
- determining an electric source current at which electric energy is fed into the grid from the source of electric energy, and
- if the electric source current is non-zero, controlling the battery assembly with the battery control device to absorb electric energy from the grid by charging the battery at a battery charge current equal to or smaller than the current margin.

According to this embodiment, the domestic grid may both consume electric energy and may generate electric energy with the source, e.g. the photovoltaic panels, wind turbines or electric vehicles with vehicle-to-grid technology. If photovoltaic panels were to be included as a source of electric energy, their discharging may depend, for example, on the time of the day. During the day, for example, the sun will shine and electric energy can be generated with the photovoltaic panels. During the night, no sunlight will be present and the domestic grid will not generate, but instead consume electric energy.

With the present battery assembly associated with the source of electric energy, the method further includes the step that an additional current measurement is performed, for example with a dedicated source sensor or with a functional coupling between the central processing device and a driver device of the source of electric energy. This current measurement yields a source current signal representative for the electric current at which electric energy is fed into the domestic grid from the source of electric energy.

The source current is retrieved by the central processing device, which determines whether electric energy is generated by the source of electric energy. If electric energy is generated, the electric source current is non-zero. In that situation, the electric energy generated with the source may be used to charge the battery. To this effect, the battery assembly is controlled to absorb electric energy from the domestic grid to charge the battery.

During charging, however, the maximum electric current must also be considered for the domestic grid, to prevent overloading of the groups or phases. To this effect, also the charging of the battery is controlled to be at a battery charging current that is no more than the current margin that was obtained when the electric meter current was subtracted from the maximum electric current.

In a further embodiment, the battery assembly is controlled with the battery control device to absorb electric energy from the grid by charging the battery at a battery charge current equal to or smaller than the negative electric meter current.

According to this preferred embodiment, the battery is charged at a current that is below the negative electric meter current, so that it can be prevented that electric energy is withdrawn from the public grid into the battery. Instead, this embodiment provides that the battery is only charged with electric energy that is generated by the source of electric energy included in the domestic grid. This may improve the efficiency of the present method, since optimal use is made of the electric energy generated with the source.

In a further embodiment, the grid further comprises a source sensor device, functionally associated with the central processing device and configured to measure the electric source current, and wherein the step of determining the electric source current comprises:
- measuring the electric source current with the source sensor device, and
- processing the measured electric source current with the central processing device.

The method according to this embodiment relies on an active measurement of the current at which the electric energy is generated with the source. This measurement can be performed periodically, so that the charging of the battery can be repeated over time.

During use, the source sensor device is configured to measure electric currents at which electric energy is generated by the source of electric energy. The source sensor device is thereby configured to emit a source sensor signal representative of the current from the source. The source sensor signal may be transmitted to the central processing device, so that the central processing device is able to process the signal and that the central processing device is able to control the battery control device to control charging of the battery on the basis of the source sensor signal.

In an embodiment, the battery control device only controls the battery assembly to supply electric energy to the grid by discharging the battery when no electric energy can be fed into the grid from the source of electric energy, for example only when the sun has set.

According to this embodiment, other parameters can be relied upon to control the discharging of the battery. If, for example, no electric energy is generated with the source of electric energy, for example when the sun has set or when wind speeds are too low to generate wind energy, the battery assembly may be used to supply the domestic grid with electric energy.

This embodiment may provide for example that the battery assembly can be used to supply the domestic grid with electric energy overnight. As such, nighttime stand-by power can be provided for the domestic grid, which means that no electric power may need to be consumed from the public grid over night.

In an embodiment, the method further comprises the steps of:
- detecting to which electric phase the source of electric energy is connected,
- measuring an electric current guided via the electricity meter for the electric phase to which the source of electric energy is connected to obtain the electric meter current.

According to this embodiment, the measurement of the electric meter current may be performed only for the phase to which the source of electric energy is connected. This method may further include the step of determining to which of the phases the source is connected. In this way, the electric current margin is determined by the net sum of the source current and the current at which electric energy is withdrawn from the public grid.

In an embodiment, the method further comprises the step of detecting, with the central processing device, whether the grid comprises a connection with a source of electric energy, and the battery control device only controls the battery assembly to supply electric energy to the grid by discharging the battery when no connection between the grid and a source of electric energy is detected.

This embodiment of the method may provide that the battery assembly is only used to discharge electric energy into the domestic grid when no electric energy can be fed into the grid from the source of electric energy. This may be beneficial when the source of electric energy is not always connected to the grid, for example when the user uses photovoltaic panels that are also plugged into the power sockets of the domestic grid or when another battery, such as the electric vehicle, is not always connected to the domestic grid. Similarly, this embodiment may be more user friendly as well, since it autonomously detects whether sources of electric energy are present in the domestic grid and thus not requires users to set up the connection with the source by themselves, thus improving user friendliness.

In an embodiment, the method further comprises the steps of:
- determining an electricity price per unit of energy with the central processing device, and if the electricity price is negative:
- controlling the battery assembly with the battery control device to terminate discharging of the battery, and
- controlling the battery assembly with the battery control device to absorb electric energy from the grid by charging the battery at a battery charge current equal to or smaller than the current margin.

The method according to this embodiment may further use the prices for electricity as an input for the charging and discharging of the battery. These prices may vary over time, for example concerning prices that vary per hour, depending on the time of the day. For example, renewable electric energy may be typically generated during the day to a larger extent than overnight, which may result in higher prices in the evening and at night.

The present method allows that the battery can be charged when the electricity prices are relatively low and that the battery can be discharged when the electricity prices are relatively high. It may even occur that electricity prices are negative, so that a user would need to pay the public grid operator when electric energy is fed into the public grid. Equally, if a user were to absorb electric energy from the public grid, they would even get money for it. The present method does make use hereof, as it controls the battery assembly to charge the battery in case prices are negative, so when no costs are involved for charging the battery.

Also here, the charging of the battery with negative electricity prices is performed at a battery charging current that is no more than the current margin, in order to take into account the maximum electric current and to prevent overloading of the groups or phases.

In an embodiment, the central processing device may be connectable to an external source of control, for example a remote operator. The remote operator may overrule controlling of the charging and discharging, for example by forcing a charging of the battery to absorb electric energy from the public grid in order to reduce peaks in electric current.

The overruling may imply that the battery can be charged even when no electric energy is generated within the domestic grid. During normal operation, the battery may for example be charged only with excess electric energy in the domestic grid, when that excess is fed back in the public grid resulting in a negative electric meter current. With the overruling, the battery can be charged also when no excess electric energy is present in the domestic grid.

Such a remote operator may for example be a grid operator that is responsible for reliable operation of the public grid. Those grid operators may make use of the battery assemblies at the consumers to resolve peak loading of the public grid on a very localized and thus effective scale.

In an embodiment, the central processing device may be controlled to charge and discharge the battery according to a predetermined charging schedule. Such a charging schedule may be relied upon when it is for example desired to reduce expected peak loading of the grid.

This may for example be beneficial in reducing peak loading resulting from cooking during dinner time. The central processing device may then, for example, control charging of the battery ahead of dinner time, so that the battery may for example be fully charged at 6 PM. Next, the central processing device may control discharging of the battery when a relatively large electric current is drawn through the meter into the domestic gid, which would be indicative for an induction hob in the domestic grid that is activated when dinner is being cooked. As such, the peak loading during cooking is at least partially consumed out of the battery that was charged in advance, thereby spreading the consumption of electric energy over a larger timespan.

In an embodiment, the battery is charged and/or discharged at a current equal to or smaller than 3.5 A, for example equal to or smaller than 2.6 A. This range of the battery charging current or battery discharging current is not just any arbitrary value. Instead, these currents may correspond to a safety margin for the current in the domestic grid, e.g. for each group or phase, on top of the maximum electric current. In this way, it may be provided that a combined electric current during maximal discharging of the battery and the maximum electric current of the breakers of the grid may still lie below the safety margin of the domestic grid, thereby still avoiding short-circuiting and other modes of failure for the grid.

In an embodiment, the central processing device is included in the battery assembly. This embodiment may provide that the majority of the hardware components used, e.g. the battery and the central processing device, are all included in the battery assembly. The battery assembly may then be provided as a single plug-and-play unit, which is relatively easy and safe to install by a user, not requiring professional installers.

The current sensor device may still be provided as a separate entity, since that needs to be installed at or near the electricity meter, which may typically be located remote from the power socket to which the battery assembly is connected.

In an embodiment, the central processing device is associated with the current sensor device and/or the battery assembly and/or the source sensor device via a wireless network connection, for example via a Wi-Fi network and/or a cloud network. As such, the hardware components that are located away from each other may be able to communicate via the wireless network connection. This may further improve the ease of installation, since no wired connections need to be established between the components.

In an embodiment, the battery assembly further comprises a water sensor, configured to detect the presence of water or other liquids inside the battery assembly, for example in the battery. The water sensor may be configured to emit a water sensor signal representative for the presence of water, which signal may be forwarded to the battery control device. The battery control device may be configured to terminate operation of the battery assembly as soon as the water sensor signal has reached a critical value, for example when a fluid has been detected in the battery.

In an embodiment, the battery assembly further comprises a temperature sensor, configured to measure a temperature level inside the battery assembly, for example in the battery, and/or of the ambient. The temperature sensor may be configured to emit a temperature sensor signal representative for the measured temperature level, which signal may be forwarded to the battery control device. The battery control device may be configured to terminate operation of the battery assembly as soon as the temperature sensor signal falls outside a predetermined temperature range, for example when the temperature of the ambient is lower or higher than a predetermined temperature range for which safe operation o the battery assembly can be safeguarded.

In an embodiment, the battery assembly further comprises an accelerometer, configured to measure accelerations of the battery, for example during transportation and/or to detect accidental falling of the battery. The accelerometer may be configured to emit an accelerometer sensor signal representative for the measured acceleration, which signal may be forwarded to the battery control device. The battery control device may be configured to terminate operation of the battery assembly as soon as the accelerometer sensor signal has reached a critical value, for example when transportation damage has occurred and/or when the battery has fallen, which could potentially have damaged the battery.

In an embodiment, the battery assembly may comprise an alarm device, for example comprising an acoustic alarm and/or a visual alarm the alarm may be activated to warn users in case one or more of the sensors detect conditions that no longer offer safe operation of the battery assembly.

In an embodiment, the method may further comprise, e.g. at the onset of the method, for example after the step of connecting the battery assembly to the grid and before the repeating of the steps of measuring, obtaining an controlling, the step of initializing a status of the battery assembly. This initializing may comprise retrieving sensor signals from the respective sensors that are provided in the battery assembly, for example from the water sensor, the temperature sensor and/or the accelerometer.

During the initializing, the battery control device may be configured to prevent the battery from becoming operative, for preventing charging and discharging, in case the sensor signals are outside respective ranges that enable safe operation, for example to prevent startup of the battery in case transportation damage has occurred.

In an embodiment, the method may comprise the step of monitoring and/or controlling the battery assembly remotely, for example by a remote operator, for example to release the battery assembly in case the initializing has prevented the batter from starting. This may be beneficial to allow the battery to commence charging or discharging when no damage to the battery assembly has been detected.

The present invention further provides a domestic battery assembly for absorbing and/or supplying electric power from, respectively to a domestic electricity grid in a building, for use in a method as disclosed herein, the battery assembly comprising:
- a battery, configured to at least temporarily store electric energy,
- a battery plug, electrically connected to the battery through a cable and configured to be inserted in a power socket of the grid, and
- a battery control device, functionally associated with the battery and configured to control charging and discharging of the battery.

The domestic battery assembly according to the present invention may comprise one or more of the features and/or benefits disclosed herein in relation to the method according to the present invention, for example as recited in the appended claims.

The present battery assembly is typically intended for domestic purposes, for example in houses, apartments, or other buildings, such as offices, with a conventional domestic electricity grid. Such a grid may be defined as the entire electric circuitry in the building that is located downstream of the electricity meter of the building, so distinct from the public outdoor grid and outside the responsibility of a grid operator.

The domestic battery assembly that is configured to store electric energy in a battery of the battery assembly. The battery assembly comprises a conventional battery plug, with which the battery can be connected to a power socket in the domestic electricity grid in a manner similar to other household appliances.

The present battery assembly operates in a safe manner and provides for an additional safety measure to avoid electric overloading of the domestic grid, i.e. in addition to measures already present in the grid. Hence, the individual phases in the domestic grid or different groups may be rated at a certain maximum electric current. This maximum current is typically set with safety breakers in the fuse box, near the electricity meter. These are typically rated at a maximum current, with a safety margin, but only measure the electric current obtained from the public grid and through the electricity meter. If one would connect a conventional domestic battery to the domestic grid, one may risk that electric current is supplied both through the breaker and from the battery, so that a potential combined electric current may lie above the rated maximum current of the breakers. This combined current will not pass through the breakers, so will not be detected therewith. As a result, the combined current may lead to overloading of the domestic grid with all associated risks.

During operation, the battery assembly is connected to the domestic grid via the battery plug that is inserted in the power socket. The battery assembly may be connected to any power socket in the building, which means that it is not required for a user to determine in advance to which phase or which group the battery assembly is connected, nor does the user need to set this as a control parameter. This is a first step to make installation more user friendly, compared to the known systems.

The battery control device is associated with the battery, for example physically included in the battery assembly. Alternatively, the battery control device may as well be operated remotely, for example via a wireless network connection, such as via Wi-Fi. The battery control device is configured to control charging and discharging of the battery during use and may, to this effect, be functionally connected to the current sensor device, for example via a wired connection or a wireless network connection, such as Wi-Fi.

During use, a current sensor device is configured to measure electric currents and to emit a current sensor signal representative of the current that is measured at or near an electricity meter of the domestic grid. During a comparison may be made between a maximum electric current determined for the domestic grid and the measured electric current. With the comparison between the electric meter current with the maximum electric current, it can be determined whether the electric current in a group or phase of the grid, i.e. a theoretical current should all current be drawn to a single group or phase, already reaches the maximum electric current, or whether there is an electric current margin. The electric current margin represents the remaining electric current that can be guided through the domestic grid, e.g. the groups or phases thereof, before reaching the maximum electric current above which operation may become unsafe.

The battery control device may be controlled to discharge the battery, in order to feed electric energy into the domestic grid from the battery. However, the battery control device may be controlled to let the battery discharge at an electric current that cannot be larger than the electric current margin, so that the overall current in the domestic grid cannot exceed the maximum electric current. In this way, the present method is able to safeguard that the electric current in the domestic grid cannot exceed the maximum electric current, even when such an exceeding is not detected by the grid's breakers in the fuse box.

As such, the present battery assembly may enable intrinsically safe operation when connected to the grid for temporarily storing electric energy, without requiring professional installers, since the maximum electric current of the domestic grid cannot be exceeded. As indicated, the present battery assembly can be installed by the end users themselves, being connectable to any power socket of the grid, whilst still ensuring safe operation and avoiding exceeding of the maximum electric current.

In an embodiment, the battery has a maximum capacity of at least 5kWh, preferably at least 2 kWh, for example of about 2.5 kWh. It was found by the present inventors that a battery assembly with a battery capacity in this range may offer a desirable balance between storage capacity, for example sufficiently large to be able to supply electric energy for nighttime stand-by power of the domestic grid overnight, and cost. As such, the present battery assembly may be adjusted for a typical average domestic grid.

Alternatively or additionally, the battery has a maximum charging and/or discharging current equal to or smaller than 3.5 A, for example equal to or smaller than 2.6 A. This range of the battery charging current or battery discharging current is not just any arbitrary value. Instead, these currents may correspond to a safety margin for the current in a domestic grid, e.g. for each group or phase, on top of the maximum electric current. In this way, it may be provided that a combined electric current during maximal discharging of the battery and the maximum electric current of the breakers of the grid may still lie below the safety margin of the domestic grid, thereby still avoiding short-circuiting and other modes of failure for the grid.

The present invention also provides a current sensor device for use in a method as discloses herein, wherein the current sensor device is connectable to a domestic electricity grid in a building at an electricity meter of the building, for example insertable in a P1 port of the electricity meter, and configured to measure an electric meter current that is fed into or out of the grid via the electricity meter.

The current sensor device according to the present invention may comprise one or more of the features and/or benefits disclosed herein in relation to the method and the battery assembly according to the present invention, for example as recited in the appended claims.

The present current sensor device is configured to measure electric currents and to emit a current sensor signal representative of the current that is measured. The current sensor signal may be transmitted to a battery control device of a battery assembly, so that the battery control device is able to control charging and discharging of the battery on the basis of the current sensor signal. With the current sensor device provided at the electricity meter, the overall electricity consumption or delivery of the building may used as an input for the current sensor signal. As an example, the current sensor device may be inserted in the P1 port of the electricity meter. Such a P1 port is generally provided in the electricity meter with the purpose of monitoring and servicing and generally operates according to a standardized protocol, which allows for convenient cooperation with the current sensor device.

During use, the electric current at the electricity meter can be measured with the current sensor device and the current sensor signal can be transmitted to the central processing device of the battery assembly. Optionally, the central processing device and the battery control device may be the same device, for example a single computer device, which is configured to perform at least two functionalities, namely to function as the central processing device and as the battery control device.

The central processing device may then determine the maximum current for the domestic grid. This determining may be carried out in situ, being specifically adapted for that grid, or may be determined in advance. Hence, in certain jurisdictions, local standards apply for a maximum electric current allowed in domestic grids, for example depending on the thickness of the conductors used in the grid.

In an embodiment, the current sensor device further comprises a sensor communication device for transmitting signals between current sensor device and a wireless network connection, for example via a Wi-Fi network and/or a cloud network. The sensor communication device may allow that hardware components can be located away from each other may be able to communicate via the wireless network connection. The current sensor device may then, for example, be located at or near the electricity meter of the domestic grid, wherein the battery assembly may be located remotely from the current sensor device, i.e. at any power socket in the building. The wireless network connection may further improve the ease of installation, since no wired connections need to be established between the components.

It is noted that, although the present application relates to the operating of a domestic battery assembly and to such a domestic battery assembly itself, the prevent inventive concept is applicable on a broader scale. It has been illustrated above that the present invention enables improved overloading prevention for groups and phases in a domestic grid when electric energy is fed into it. This may not only be effected via a battery assembly, but for example also when another source of electric energy is connected to the grid, such as a photovoltaic panel that is connected to a wall socket of the grid, a wind turbine or an electric vehicles with vehicle-to-grid technology.

To prevent overloading by these other sources, the present invention further provides a method of operating a domestic source of electric energy by selectively supplying or terminating a supply of electric energy to a domestic electricity grid in a building, which grid comprises one or more electric phases, wherein the method comprises the steps of:
- connecting the source of electric energy to the grid,
- providing a current sensor device that is configured to measure electric currents,
- connecting the current sensor device to the grid at an electricity meter of the building, for example inserting the sensor device in a P1 port of the electricity meter,
- measuring, with the current sensor device, an electric meter current that is fed into or out of the grid via the electricity meter,
- determining a maximum electric current for the grid,
- providing a central processing device, functionally associated with the current sensor device and the source of electric energy,
- comparing, with the central processing device, the electric meter current with the maximum electric current to obtain an electric current margin, and
   - if the obtained current margin is positive, controlling the source of electric energy with to supply electric energy to the grid at a source current equal to or smaller than the current margin, and
   - if the obtained current margin is negative or zero, controlling the source of electric energy to terminate a supply of electric energy to the grid from the source of electric energy.

The present method for operating the domestic source of electric energy may comprise one or more of the features and/or benefits disclosed herein in relation to the method of operating the domestic battery assembly according to the present invention, in particular as recited in the appended claims. This method does, in a manner similar as for the operating of the battery assembly, take into account an electric current margin for the grid, in order to prevent overloading that could not be detected via the safety breakers in the fuse box.

Furthermore, the applicability of the invention for other domestic sources of electric energy yields that the present invention also provides a domestic source of electric energy for supplying electric power to a domestic electricity grid in a building, for use in a method as disclosed herein, the source of electric energy comprising:
- means for generating electric energy, for example one or more photovoltaic panels, and
- a central processing device, associated with the means for generating electric energy and configured to compare an electric meter current, measured at an electricity meter of the grid, with a maximum electric current for the grid, in order to obtain an electric current margin, wherein the central processing device is further configured to control the source of electric energy for selectively supplying or terminating a supply of electric energy to the grid in dependence of the electric current margin, in particular to only discharge electric energy into the grid when the obtained current margin is positive and to terminate a supply of electric energy to the grid when the obtained current margin is negative or zero.

The present domestic source of electric energy may comprise one or more of the features and/or benefits disclosed herein in relation to the domestic battery assembly according to the present invention, in particular as recited in the appended claims. In particular, the present domestic source of electric energy is able to selectively discharge electric energy into the grid, which can be carried out while taking into account an electric current margin for the grid, in order to prevent overloading that could not be detected via the safety breakers in the fuse box.

Finally, the present invention also provides a central processing device for use in a method of operating a domestic battery assembly as disclosed herein and/or for use in a method of operating a domestic source of electric energy, in order to prevent a domestic electricity grid from overloading due to excessive electric energy being supplied into the grid from the battery assembly and/or the source of electric energy. The central processing device is configured to compare an electric meter current, measured at an electricity meter of the grid, with a maximum electric current for the grid, in order to obtain an electric current margin. The central processing device is intended to be associated with the battery assembly and/or the source of electric energy and is further configured to control the battery assembly and/or the source of electric energy for selectively supplying or terminating a supply of electric energy to the grid in dependence of the electric current margin, in particular to only discharge electric energy into the grid when the obtained current margin is positive and to terminate a supply of electric energy to the grid when the obtained current margin is negative or zero.

The present central processing device may comprise one or more of the features and/or benefits disclosed of the central processing device disclosed herein in relation to the method according to the present invention, in particular as recited in the appended claims. In particular, the present central processing device is able to selectively discharge electric energy into the grid, which can be carried out while taking into account an electric current margin for the grid, in order to prevent overloading that could not be detected via the safety breakers in the fuse box.

Furthermore, the central processing device may be used for controlling third party appliances, such as plug-in solar panels or conventional batteries that are themselves not capable of charging and discharging in dependence of an electric meter current and/or an electric current margin. With the present central processing device, safe of operation of such conventional appliances can be safeguarded by limiting, or even inhibiting discharging of electric currents into the domestic grid.

### Brief description of drawings

Further characteristics of the invention will be explained below, with reference to embodiments, which are displayed in the appended drawings, in which:
Figure 1 schematically depicts a first embodiment of a battery assembly according to the present invention during operation, while carrying out an embodiment of the method according to the present invention,
Figure 2 schematically depicts a second embodiment of the battery assembly according to the present invention, and
Figure 3 schematically depicts a third embodiment of the battery assembly according to the present invention.

Throughout the figures, the same reference numerals are used to refer to corresponding components or to components that have a corresponding function.

### Detailed description of embodiments

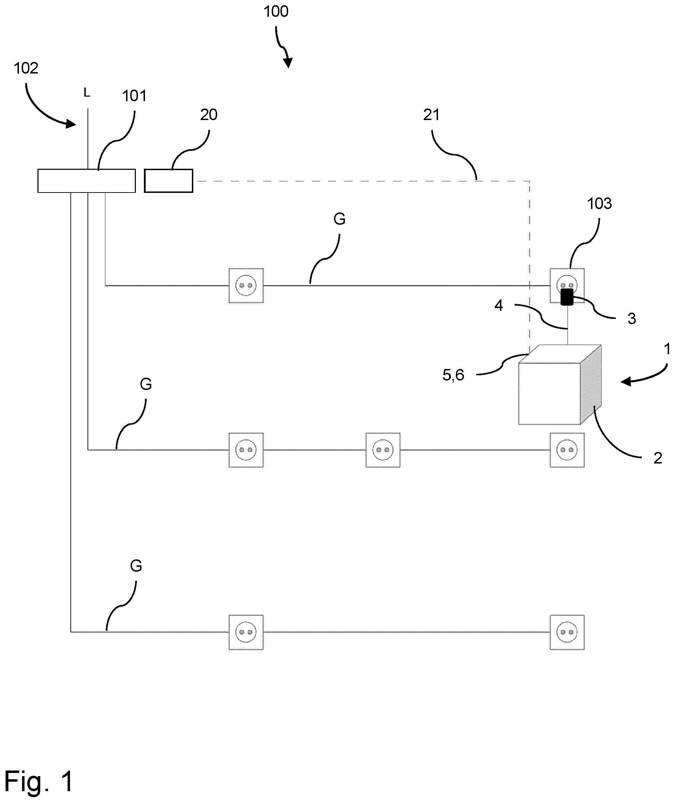

Figures 1-3 schematically depict various embodiments of a domestic battery assembly, to which are referred with reference numeral 1. The battery assembly 1 is shown in operation in the figures, when carrying out an embodiment of the method according to the present invention. This method is typically applied for domestic purposes, for example in houses, apartments, or other buildings, such as offices, with a conventional domestic electricity grid 100. The grid 100 is thereby defined as the entire electric circuitry in the building that is located downstream of an electricity meter 101 of the building, so distinct from the public outdoor grid 102 and outside the responsibility of a grid operator.

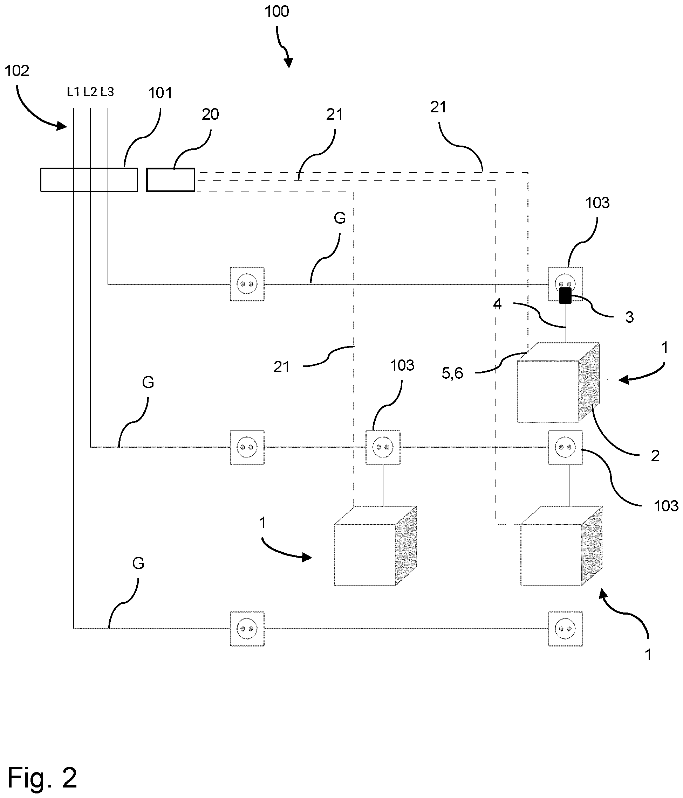

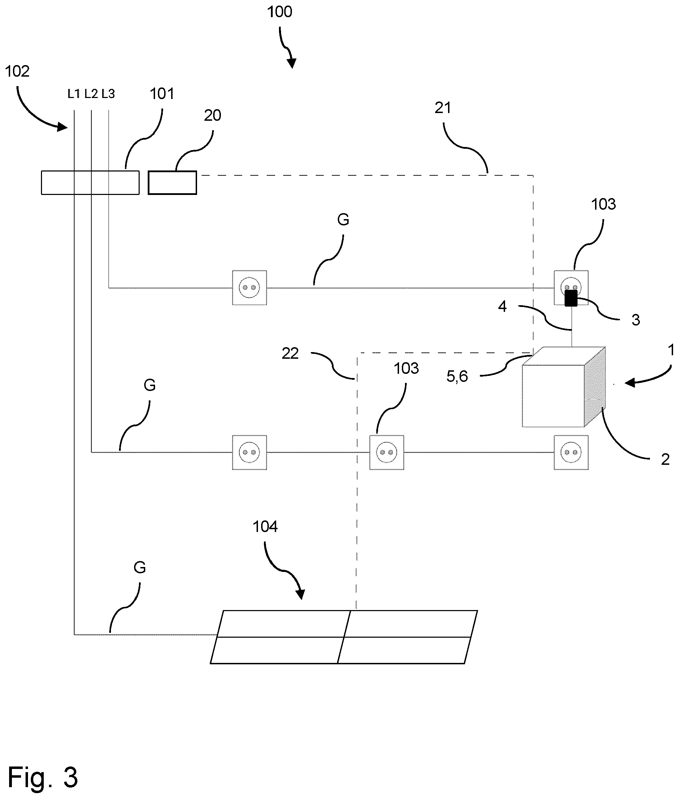

The grid 100 is connected to the public outdoor grid 102 with one phase L, as it is shown in figure 1, or three phases L1, L2, L3, as shown in figures 2 and 3. In the embodiment in figure 1, the grid 100 comprises three groups G, downstream of the electricity meter 101. In the embodiment in figures 2 and 3, the grid 100 also comprises three groups G, i.e. one for each of the phases L1, L2, L3. The groups G and phases L comprise a number of power sockets 103 and/or a connection to a source of electric energy.

The battery assembly 1 comprises a battery 2, in which it is configured to store electric energy. This storage is at least temporarily, so that the battery 2 can absorb electric energy, hold the electric energy for a certain period of time and discharge the electric energy afterwards. The battery 2 has a maximum capacity of 2.5 kWh. Furthermore, the battery 2 has a maximum charging and/or discharging current equal to or smaller than 3.5 A.

The battery assembly 1 further comprises a conventional battery plug 3, which is connected to the battery 2 via a battery line 4, with which the battery 2 is connected to a power socket 103 in the domestic grid 100 in a manner similar to the way other household appliances are plugged. The battery assembly 1 may be connected to any of the power sockets 103 in the grid 100, which means that it is not required for a user to determine in advance to which phase L or which group G the battery assembly 1 is connected, nor does the user need to set this as a control parameter.

The battery assembly 1 further comprises a battery control device 5, which is physically included in the battery assembly 1, next to the battery 2. The battery control device 5 is configured to control charging and discharging of the battery 2 during use of the battery assembly 1. To this effect, the battery control device 5 is functionally connected to a current sensor device 20 at the electricity meter 101. This connection includes a wireless network connection 21, which is schematically depicted in the figures by means of dashed lines.

The present method includes an additional safety measure, which avoids electric overloading of the domestic grid 100, in particular avoiding that excess electric current is supplied both through the electricity meter 101 breaker and from the battery 2.

The additional safety measure according to the present method relies on the fact that an additional electric current measurement is performed by means of the current sensor device 20. The current sensor device 20 is provided at the electricity meter 101 and is thereby able to measure the electric current that is retrieved from the public grid 102 into the domestic grid 100 or that is fed into the public grid 102 from the domestic grid 100. In the present embodiment, this measurement is a global current measurement, so a combined measurement for all phases L of the domestic grid 100 combined. As such, it is therefore not necessary to know to which phase L or group G of the grid 100 the battery assembly 1 is connected. Alternatively, such a measurement may be specifically performed for the respective phase L or group G of the domestic grid 100 in which the power socket 103 is included to which the battery assembly 1 is connected.

During use, the current sensor device 20 is configured to measure electric currents and to emit a current sensor signal representative for the current that is measured. The current sensor signal is transmitted to the battery control device 5 via the wireless connection 21, so that the battery control device 5 is able to control charging and discharging of the battery 2 on the basis of the current sensor signal.

As an alternative, the method may comprise detecting to which electric phase L the battery assembly is connected, and may involve measuring an electric current guided via the electricity meter 101 for the specific electric phase L to which the battery assembly 1 is connected to obtain the electric meter current. For this alternative embodiment, the comparison between the maximum electric current and the measured electric meter current may be limited to the specific phase L to which the battery assembly 1 is connected.

With the current sensor device 20 provided at the electricity meter 101, the overall electricity consumption or delivery of the building may used as an input for the current sensor signal. In the present embodiment, the current sensor device 20 is inserted in the P1 port of the electricity meter 101. The current sensor device 20 is thereto provided as a plug-and-play sensor device with a P1 port connector and a wireless antenna.

The battery assembly 1 further comprises a central processing device 6, which is also arranged adjacent to the battery 2, in a manner similar to the battery control device 5. As such, the entire battery assembly 1 may be provided as plug-and-play unit, which is convenient to install by a user, i.e. by simply inserting its plug 3 into one of the sockets 103. During operation, the central processing device 6 bases its operation on a maximum electric current for the domestic grid 100, which is determined in advance. Such a maximum electric current can be often established on the basis of local standards that apply for a maximum electric current allowed in domestic grids 100, for example depending on the thickness of the conductors used in the grid 100. In The Netherlands, for example, a maximum electric current of 16 A typically applies for each group G in a domestic grid 100. This value represents a maximum current per group G, which means that a combined value for all groups G combined may be larger.

The central processing device 6 is configured to make a comparison between the maximum electric current and the measured electric current obtained from the current sensor device 20. With this comparison, the central processing device 6 is able to determine whether the electric current in a group G or phase L of the grid 100, i.e. a theoretical current in case all current is drawn to a single group G or phase L, already reaches the maximum electric current, or whether there is an electric current margin. The electric current margin represents the remaining electric current that can be guided through the domestic grid 100, e.g. the groups G or phases L thereof, before reaching the maximum electric current above which operation may become unsafe.

Next, the central processing device 6 will control the battery control device 5 to discharge the battery 2. As such, electric energy can be fed into the domestic grid 100 from the battery 2. However, the battery control device 5 is controlled by the central processing device 6 to let the battery 2 discharge at an electric current that cannot be larger than the electric current margin, so that the overall current in the domestic grid 100 cannot exceed the maximum electric current.

During operation, the steps of measuring electric current and determining the electric current margin is repeated over time, at certain intervals. As such, the controlling of the battery assembly 1 with the battery control device 5 is repeated and adjusted to the changing electric meter current repeatedly. Should, for example, the electric meter current reach the maximum electric current, the battery control device 5 may control the battery assembly 1 to at least temporarily pause the discharging of the battery 2, in order to avoid overloading of the domestic grid 100.

The embodiments of figures 1 and 2 are relatively similar. In the embodiment in figure 1, a single battery assembly 1 is provided, being connected to a power socket 103 of a single group G. In figure 2, multiple battery assemblies 1 are provided, which are each connected to a distinct group G and to different phases L2, L3 of the grid 100. The multiple battery assemblies 1 in the embodiment of figure 2 are connected to a single current sensor device 20 via respective wireless connections 21.

When the method of operating the battery assembly 1 is carried, the battery control device 5 may control terminating discharging of the battery 2 when the electric meter current is negative. At least, in such a situation, the battery discharge current at which the battery 2 is discharged may be reduced, in order to bring the electric meter current to zero or to a positive electric meter current. This situation may occur when electric energy is fed out of the domestic electricity grid 100 and into the public grid 102. As such, the central processing device 6 may take into account a situation where the domestic grid 100 may also include sources of renewable energy, such as photovoltaic panels. When electric energy is fed into the public grid 102, it is no longer necessary to discharge the battery 2, since there already is an excess of electric energy in the domestic grid 100. A similar situation may occur when, for example, another battery is connected to the domestic grid 100, such as the battery an electric vehicle that is also able to discharge into the grid 100.

Furthermore, the method may include that an electricity price per unit of energy is determined with the central processing device 6. Should the electricity price be negative, the central processing device 6 may control the battery assembly 1 with the battery control device 5 to terminate discharging of the battery 2, and may control the battery assembly 1 with the battery control device 5 to absorb electric energy from the grid 100 by charging the battery 2 at a battery charge current equal to or smaller than the current margin. These electricity prices may vary over time, which allows that the battery 2 can be charged when the electricity prices are relatively low and that the battery 2 can be discharged when the electricity prices are relatively high.

In the embodiment shown in figure 3, the grid 100 further comprises a connection with a source of electric energy, embodied as a photovoltaic panel 104. The grid 100 may thereby both consume electric energy from the public grid 102 and may generate electric energy with the photovoltaic panel 104, depending on the time of the day. During the day, the sun may shine and electric energy can be generated with the photovoltaic panel 104. During the night, no sunlight will be present and the domestic grid 100 will not generate, but instead consume electric energy from the pubic grid 102.

In the configuration in figure 3, the operation may further comprise that a possible connection with a source of electric energy is detected, for example with the central processing device 6. Next, the battery control device 5 can control the battery assembly 1 to only supply electric energy to the grid 100 when no connection between the grid 100 and a source of electric energy can be detected, which may apply when the source of electric energy is not always connected to the grid 100.

With the battery assembly 1 in figure 3 associated with the photovoltaic panel 104, an additional current measurement is performed, which yields a source current signal representative for the electric current at which electric energy is fed into the domestic grid 100 from the photovoltaic panel 104. In figure 3, this is illustrated by means of a dashed line representing a wireless panel connection 22 towards the central processing device 6. The central processing device 6 thereto comprises a source sensor device, functionally associated with the photovoltaic panel 104 via the wireless panel connection 22, which is configured to measure the electric source current from the photovoltaic panel 104 into the grid 100. The source current is retrieved by the central processing device 6, which determines whether electric energy is generated by the photovoltaic panel 104 or not. If electric energy is generated, the electric source current is non-zero. In that situation, the electric energy generated with the photovoltaic panel 104 may be used to charge the battery 2. To this effect, the battery assembly 1 is controlled to absorb electric energy from the domestic grid 100 to charge the battery 2.

During charging, however, the maximum electric current must also be considered for the domestic grid 100, to prevent overloading of the groups G or phases L. To this effect, also the charging of the battery 2 is controlled to be at a battery charging current that is no more than the current margin that was obtained when the electric meter current was subtracted from the maximum electric current. Furthermore, the battery assembly 1 can be controlled with the battery control device 5 to absorb electric energy from the grid 100 by charging the battery 2 at a battery charge current equal to or smaller than the negative electric meter current, so that it can be prevented that electric energy is withdrawn from the public grid 102 into the battery 2. Furthermore, the battery control device 5 will only control the battery assembly 1 to supply electric energy to the grid 100 when no electric energy can be fed into the grid 100 from the photovoltaic panel 104, for example only when the sun has set.

The present invention is further illustrated by reference to one or more of the following embodiments:
Embodiment 1. Method of operating a domestic battery assembly by absorbing and/or supplying electric energy from, respectively to a domestic electricity grid in a building, which grid comprises one or more electric phases, wherein the method comprises the steps of:
   - providing a domestic battery assembly, comprising:
      · a battery, configured to at least temporarily store electric energy,
      · a battery plug, electrically connected to the battery through a cable and configured to be inserted in a power socket of the grid, and
      · a battery control device, functionally associated with the battery and configured to control charging and discharging of the battery,
   - connecting the battery assembly to the grid by inserting the battery plug in a power socket of the grid,
   - providing a current sensor device that is configured to measure electric currents,
   - connecting the current sensor device to the grid at an electricity meter of the building, for example inserting the sensor device in a P1 port of the electricity meter,
   - measuring, with the current sensor device, an electric meter current that is fed into or out of the grid via the electricity meter,
   - determining a maximum electric current for the grid,
   - providing a central processing device, functionally associated with the current sensor device and the battery control device,
   - comparing, with the central processing device, the electric meter current with the maximum electric current to obtain an electric current margin, and
   - if the obtained current margin is positive, controlling the battery assembly with the battery control device to supply electric energy to the grid by discharging the battery at a battery discharge current equal to or smaller than the current margin.
Embodiment 2. Method according to embodiment 1, comprising repeating the steps of measuring, comparing and, if the obtained current margin is positive, controlling of the battery assembly.
Embodiment 3. Method according to embodiment 1 or 2, wherein the step of measuring comprises:
   - measuring an electric current guided via the electricity meter for each electric phase, and
   - combining the measured electric currents for all phases to obtain the electric meter current.
Embodiment 4. Method according to embodiment 1 or 2, wherein the step of measuring comprises:
   - detecting to which electric phase the battery assembly is connected,
   - measuring an electric current guided via the electricity meter for the electric phase to which the battery assembly is connected to obtain the electric meter current.
Embodiment 5. Method according to any of the preceding embodiments, further comprising the step of:
   - if the electric meter current is negative, i.e. when electric energy is fed out of the domestic electricity grid, controlling the battery assembly with the battery control device to terminate discharging of the battery.
Embodiment 6. Method according to any of the preceding embodiments, wherein the grid further comprises a connection with a source of electric energy, for example one or more photovoltaic panels, wind turbines or electric vehicles with vehicle-to-grid technology, wherein the method further comprises the steps of:
   - determining an electric source current at which electric energy is fed into the grid from the source of electric energy, and
   - if the electric source current is non-zero, controlling the battery assembly with the battery control device to absorb electric energy from the grid by charging the battery at a battery charge current equal to or smaller than the current margin,
   wherein, preferably, the battery assembly is controlled with the battery control device to absorb electric energy from the grid by charging the battery at a battery charge current equal to or smaller than the negative electric meter current.
Embodiment 7. Method according to embodiment 6, wherein the grid further comprises a source sensor device, functionally associated with the central processing device and configured to measure the electric source current, and
   wherein the step of determining the electric source current comprises:
   - measuring the electric source current with the source sensor device, and
   - processing the measured electric source current with the central processing device.
Embodiment 8. Method according to embodiment 6 or 7, wherein the battery control device only controls the battery assembly to supply electric energy to the grid by discharging the battery when no electric energy can be fed into the grid from the source of electric energy,
   for example only when the sun has set.
Embodiment 9. Method according to any of the embodiments 6-8, further comprising the steps of:
   - detecting to which electric phase the source of electric energy is connected,
   - measuring an electric current guided via the electricity meter for the electric phase to which the source of electric energy is connected to obtain the electric meter current.
Embodiment 10. Method according to any of the preceding embodiments, further comprising the step of:
   - detecting, with the central processing device, whether the grid comprises a connection with a source of electric energy source, and
   wherein the battery control device only controls the battery assembly to supply electric energy to the grid by discharging the battery when no connection between the grid and a source of electric energy is detected.
Embodiment 11. Method according to any of the preceding embodiments, further comprising the steps of:
   - determining an electricity price per unit of energy with the central processing device, and
   if the electricity price is negative:
   - controlling the battery assembly with the battery control device to terminate discharging of the battery, and
   - controlling the battery assembly with the battery control device to absorb electric energy from the grid by charging the battery at a battery charge current equal to or smaller than the current margin.
Embodiment 12. Method according to any of the preceding embodiments, wherein the battery is charged and/or discharged at a current equal to or smaller than 3.5 A, for example equal to or smaller than 2.6 A.
Embodiment 13. Method according to any of the preceding embodiments, wherein the central processing device is included in the battery assembly.
Embodiment 14. Method according to any of the preceding embodiments, wherein the central processing device is associated with the current sensor device and/or the battery assembly and/or the source sensor device via a wireless network connection, for example via a Wi-Fi network and/or a cloud network.
Embodiment 15. Domestic battery assembly for absorbing and/or supplying electric power from, respectively to a domestic electricity grid in a building, for use in a method according to any of the preceding embodiments, the battery assembly comprising:
   · a battery, configured to at least temporarily store electric energy,
   · a battery plug, electrically connected to the battery through a cable and configured to be inserted in a power socket of the grid, and
   · a battery control device, functionally associated with the battery and configured to control charging and discharging of the battery.
Embodiment 16. Battery assembly according to embodiment 15, wherein the battery has a maximum capacity of at least 5kWh, preferably at least 2 kWh, for example of about 2.5 kWh, and/or wherein the battery has a maximum charging and/or discharging current equal to or smaller than 3.5 A, for example equal to or smaller than 2.6 A.
Embodiment 17. Current sensor device for use in a method according to any of the embodiments 1 - 14, wherein the current sensor device is connectable to a domestic electricity grid in a building at an electricity meter of the building, for example insertable in a P1 port of the electricity meter, and configured to measure an electric meter current that is fed into or out of the grid via the electricity meter.
Embodiment 18. Current sensor device according to embodiment 17, further comprising a sensor communication device for transmitting signals between current sensor device and a wireless network connection, for example via a Wi-Fi network and/or a cloud network.

## Claims

1. Method of operating a domestic battery assembly by absorbing and/or supplying electric energy from, respectively to a domestic electricity grid in a building, which grid comprises one or more electric phases and/or one or more groups to which electrical appliances are connected, wherein the method comprises the steps of:
- providing a domestic battery assembly, comprising:
• a battery, configured to at least temporarily store electric energy,
• a battery plug, electrically connected to the battery through a cable and configured to be inserted in a power socket of the grid, and
• a battery control device, functionally associated with the battery and configured to control charging and discharging of the battery,
- connecting the battery assembly to the grid by inserting the battery plug in a power socket of the grid,
- providing a current sensor device that is configured to measure electric currents,
- providing a central processing device, functionally associated with the current sensor device and the battery control device,
- connecting the current sensor device to the grid at or near an electricity meter of the building, for example inserting the sensor device in a P1 port of the electricity meter,
- determining a maximum electric current for the grid,
- repeating the steps of:
- measuring, with the current sensor device, an electric meter current that is fed into or out of the grid via the electricity meter,
- obtaining an electric current margin by solely comparing, with the central processing device, the electric meter current with the maximum electric current, and
- if the obtained current margin is positive, controlling the battery assembly with the battery control device to supply electric energy to the grid by discharging the battery at a battery discharge current equal to or smaller than the current margin.

2. Method according to claim 1, wherein the step of measuring the electric meter current comprises measuring a global maximum electric current for the grid, i.e. combined for all phases and/or groups of the grid.

3. Method according to claim 1 or 2, wherein the step of determining the maximum electric current for the grid comprises determining a global maximum electric current for the grid, i.e. combined for all phases and/or groups of the grid.

4. Method according to any of the preceding claims, wherein the step of determining the maximum electric current comprises retrieving a maximum rated electric current for each of the phases and/or groups of the grid, and
selecting the lowest one of the maximum rated electric currents as the maximum electric current.

5. Method according to any of the preceding claims, wherein the step of comparing comprises the step of obtaining, with the central processing device, an electric current margin by exclusively comparing the electric meter current with the maximum electric current.

6. Method according to any of the preceding claims, wherein the method is carried independent of other appliances connected to the grid, for example in absence of a step of detecting other appliances to the grid and/or a step of measuring individual and/or instantaneous energy consumption of the other appliances and/or a step of mapping the grid.

7. Method according to any of the preceding claims, further comprising the step of:
- if the electric meter current is negative, i.e. when electric energy is fed out of the domestic electricity grid, controlling the battery assembly with the battery control device to terminate discharging of the battery.

8. Method according to any of the preceding claims, wherein the grid further comprises a connection with a source of electric energy, for example one or more photovoltaic panels, wind turbines or electric vehicles with vehicle-to-grid technology, wherein the method further comprises the steps of:
- determining an electric source current at which electric energy is fed into the grid from the source of electric energy, and
- if the electric source current is non-zero, controlling the battery assembly with the battery control device to absorb electric energy from the grid by charging the battery at a battery charge current equal to or smaller than the current margin,
wherein, preferably, the battery assembly is controlled with the battery control device to absorb electric energy from the grid by charging the battery at a battery charge current equal to or smaller than the negative electric meter current.

9. Method according to claim 8, wherein the grid further comprises a source sensor device, functionally associated with the central processing device and configured to measure the electric source current, and
wherein the step of determining the electric source current comprises:
- measuring the electric source current with the source sensor device, and
- processing the measured electric source current with the central processing device.

10. Method according to claim 8 or 9, wherein the battery control device only controls the battery assembly to supply electric energy to the grid by discharging the battery when no electric energy can be fed into the grid from the source of electric energy,
for example only when the sun has set.

11. Method according to any of the preceding claims, wherein the battery assembly further comprises a water sensor, a temperature sensor and/or an accelerometer,
wherein, preferably, the method further comprises, for example after the step of connecting the battery assembly to the grid and before the repeating of the steps of measuring, obtaining an controlling, the step of:
- initializing a status of the battery assembly, for example retrieving sensor signals from the water sensor, the temperature sensor and/or the accelerometer, and
- controlling the battery to prevent charging and discharging, in case the sensor signals are outside respective ranges that enable safe operation of the battery, for example to prevent startup of the battery in case transportation damage has occurred.

12. Domestic battery assembly for absorbing and/or supplying electric power from, respectively to a domestic electricity grid in a building, for use in a method according to any of the preceding claims, the battery assembly comprising:
• a battery, configured to at least temporarily store electric energy,
• a battery plug, electrically connected to the battery through a cable and configured to be inserted in a power socket of the grid, and
• a battery control device, functionally associated with the battery and configured to control charging and discharging of the battery.

13. Battery assembly according to claim 12, wherein the battery has a maximum capacity of at least 5kWh, preferably at least 2 kWh, for example of about 2.5 kWh, and/or
wherein the battery has a maximum charging and/or discharging current equal to or smaller than 3.5 A, for example equal to or smaller than 2.6 A.

14. Current sensor device for use in a method according to any of the claims 1-11, wherein the current sensor device is connectable to a domestic electricity grid in a building at an electricity meter of the building, for example insertable in a P1 port of the electricity meter, and configured to measure an electric meter current that is fed into or out of the grid via the electricity meter.

15. Current sensor device according to claim 14, further comprising a sensor communication device for transmitting signals between current sensor device and a wireless network connection, for example via a Wi-Fi network and/or a cloud network.
